# EUROPÄISCHE PATENTANMELDUNG

(11) **EP 3 766 688 A1**
(43) Veröffentlichungstag der Anmeldung: **20.01.2021**
(21) Anmeldenummer: 20180156.0
(22) Anmeldetag: 16.06.2020
(51) Int. Cl.: B32B 7/06, B29C 48/18, B29C 55/12, B32B 27/08, B32B 27/20, B32B 27/32, B32B 27/36

(54) **BIAXIAL-ORIENTIERTE POLYESTERFOLIE ALS SUBSTRAT FÜR HOCHBARRIERE-FOLIE MIT ABZIEHBARER OPFERSCHICHT**

(30) Priorität: 16.07.2019 DE 102019119293
(71) Anmelder: Brückner Maschinenbau GmbH & Co. KG, 83313 Siegsdorf (DE)
(72) Erfinder: KÖRBER, Alois, 83242 Reit im Winkel (DE); LINDEMANN, Willi, 83435 Bad Reichenhall (DE); LUND, Roland, 83236 Übersee (DE); KEIP, Sebastian, 83250 Marquartstein (DE)
(74) Vertreter: Flach Bauer Stahl Patentanwälte Partnerschaft mbB

(57) **Zusammenfassung**

Die vorliegende Erfindung betrifft eine co-extrudierte biaxial orientierte Folie umfassend wenigstens eine Polyester-Schicht, wobei auf wenigstens einer der beiden Oberflächen der Polyester-Schicht eine abziehbare Polypropylen-Schicht aufgebracht ist, die rückstandsfrei von der Polyester-Schicht abziehbar ist, wobei die Polypropylen-Schicht wenigstens 80 Gew.-% Polypropylen enthält und die Polyester-Schicht wenigstens 50 Gew.-% eines Polyesters enthält, der als Monomere aliphatische Diole und aromatische Dicarbonsäuren umfasst. Die vorliegende Erfindung betrifft ferner Verfahren zur Herstellung einer solchen Folie. Die Folie kann nach Entfernung der Polypropylen-Schicht als Substrat für eine Hochbarriere-Folie Verwendung finden.

## Beschreibung

### Einleitung

Die vorliegende Erfindung betrifft eine co-extrudierte biaxial orientierte Folie umfassend wenigstens eine Polyester-Schicht, wobei auf wenigstens einer der beiden Oberflächen der Polyester-Schicht eine abziehbare Polypropylen-Schicht aufgebracht ist, die rückstandsfrei von der Polyester-Schicht abziehbar ist, wobei die Polypropylen-Schicht wenigstens 80 Gew.-% Polypropylen enthält und die Polyester-Schicht wenigstens 50 Gew.-% eines Polyesters enthält, der als Monomere aliphatische Diole und aromatische Dicarbonsäuren umfasst. Die vorliegende Erfindung betrifft ferner Verfahren zur Herstellung einer solchen Folie. Die Folie kann nach Entfernung der Polypropylen-Schicht als Substrat für eine Hochbarriere-Folie Verwendung finden.

### Stand der Technik

Biaxial orientierte Polyesterfolien und ihre Eigenschaften sind dem Fachmann wohlbekannt. Sie werden unter anderem in elektrolumineszenten Anzeigevorrichtungen, insbesondere in organischen Leuchtanzeigen, wie OLEDs, in Flüssigkristallanzeigen (LCDs), in elektrophoretischen Displays (E-Paper), in Photovoltaikzellen und Halbleiterbauelementen, wie organischen Feldeffekttransistoren, Dünnfilmtransistoren und integrierten Schaltungen allgemein verwendet. Für diese und andere Anwendungen ist es oft notwendig, Polyesterfolien mit einer sehr glatten und planen Oberfläche zu verwenden. Ferner sollten die Polyesterfolien eine hohe Sauberkeit und Defektfreiheit aufweisen. Diese Eigenschaften ermöglichen es zum Beispiel Beschichtungen, insbesondere Beschichtungen mit anorganischen Partikeln mit hoher Gleichmäßigkeit und ohne Fehlstellen aufzutragen.

Um möglichst glatte Oberflächen zu erhalten kann auf der Oberfläche eine abziehbare Opferschutzschicht aufgebracht werden, die leicht von einer Substratoberfläche abziehbar ist, um diese Oberfläche vor Beschädigung, Verunreinigung und/oder Ablagerungen während der Herstellung, der Lagerung oder beim Transport zu schützen. Die Opferschicht wird dann vom Substrat abgezogen, um unmittelbar vor der weiteren Verarbeitung eine glatte und saubere Oberfläche zu erhalten.

Aus der WO 2012/123699 ist eine biaxial orientierte Polyesterfolie bekannt, die auf einer oder auf beiden Oberflächen mit einer abziehbaren Schicht aus Ethylen-Methacrylsäure-Copolymer (EMAA) versehen ist. Die Polyesterfolie weist nach Abziehen der EMAA-Schicht eine sehr glatte und sehr saubere Oberfläche auf. Allerdings verstopfen (verblocken) die Extrusionsdüsen bei der Co-Extrusion von EMAA und Polyester leicht und EMAA ist ein relativ teures Polymer. Die Verwendung von EMAA hat weitere Nachteile. Wenn es mit Sauerstoff in Berührung kommt, entwickelt sich Säure, welche die Metallteile der Apparatur, insbesondere der zur Extrusion verwendeten Düse korrodiert. Ferner ist EMAA bei Temperaturen über 200 °C nicht stabil. Es werden Versuche beschrieben, Polyesterfolien mit abziehbaren Polyolefin-Schichten zu versehen. Diese Versuche blieben jedoch erfolglos.

WO 2009/105427 offenbart biaxial orientierte Polyolefinfolien mit abziehbaren Opferschichten aus EMAA-Ionomeren. Es werden darin jedoch auch Versuche beschrieben, Polyolefinfolien mit abziehbaren Schichten aus Polyethylenterephthalat zu versehen (siehe z.B. Beispiele 4 und 5). Auch diese Versuche blieben jedoch erfolglos. Polyolefine sind jedoch interessant für die Verwendung als Opferschichten, da sie preiswert sind und vorteilhafte mechanische Eigenschaften haben. Darüber hinaus sind sie in vielen Variationen kommerziell erhältlich.

### Aufgabe der Erfindung

Es war die Aufgabe der vorliegenden Erfindung, eine Polyesterfolie bereitzustellen, die auf einer oder beiden Seiten einen Schutzfilm aufweist, der rückstandsfrei abgezogen werden kann und dabei eine sehr glatte und hochreine Oberfläche auf der Polyesterfolie erzeugt. Ferner ist es eine Aufgabe der vorliegenden Erfindung ein Verfahren zur Herstellung einer solchen Folie bereitzustellen. Die für den Schutzfilm verwendeten Materialien sollen dabei leicht und ohne Verblocken extrudiert werden können. Ferner soll die Korrosion der beim Extrudieren verwendeten Düsen so weit wie möglich reduziert werden. Eine weitere Aufgabe ist es eine mit wenigstens einer Schutzschicht versehenen Polyesterfolie bereitzustellen, die bei Temperaturen von 200°C oder darüber verarbeitbar ist ohne dabei zerstört zu werden. Das Verfahren soll dabei möglichst einfach sein und die preiswerte Herstellung der Folie ermöglichen. Ferner sollten die Schutzschichten nach Entfernen von der Polyesterfolie möglichst recycelt werden können. Gute mechanische und optische Eigenschaften der nach dem Entfernen der Schutzschichten verbleibenden Polyesterfolie werden ebenfalls angestrebt.

### Beschreibung der Erfindung

Gegenstand der vorliegenden Erfindung ist ein Herstellverfahren einer co-extrudierte biaxial orientierte Folie sowie eine Folie umfassend wenigstens eine Polyester-Schicht, wobei auf wenigstens einer der beiden Oberflächen der Polyester-Schicht eine abziehbare Polypropylen-Schicht aufgebracht ist, die rückstandsfrei von der Polyester-Schicht abziehbar ist. Dabei enthält die Polypropylen-Schicht wenigstens 80 Gew.-% eines Polypropylen-Polymeren und die Polyester-Schicht wenigstens 50 Gew.-% eines Polyesters, der als Monomere aliphatische Diole und aromatische Dicarbonsäuren umfasst. Die erfindungsgemäßen Folien erlauben es Polyesterfolien bereitzustellen, die eine sehr glatte und sehr saubere Oberfläche aufweisen, in dem die Polypropylen-Schicht abgezogen wird. Das Material der entfernten Polypropylen-Schichten kann anschließend granuliert und recycelt werden.

Die Polypropylen-Schicht wird auch Opferschicht genannt, da Sie meist nach ihrem Entfernen verworfen oder recycelt wird. Die Verwendung von Polypropylen in der Opferschicht ist vorteilhaft, da Polypropylen widerstandsfähig und preiswert ist und verblockungsfrei extrudiert werden kann. Ferner kann Polypropylen bei Temperaturen von 200 °C oder mehr zersetzungsfrei verarbeitet werden und es führt nicht zur Korrosion der beim Extrudieren verwendeten Düsen. Es kann daher die Polyester-Schicht wirkungsvoll schützen ohne einen großen Aufwand zu erfordern. Im Übrigen können Polypropylen-Schichten mit Hilfe des nachstehend beschriebenen erfindungsgemäßen Verfahrens mit Polyesterfolien coextrudiert und verstreckt werden. Insbesondere erlauben solche Polypropylen-Schichten Folien herzustellen in denen die Haftung zwischen den Schichten groß genug ist, um ein Ablösen der Schichten voneinander während der Herstellung oder der Lagerung zu verhindern. Gleichzeitig kann die Polypropylen-Schicht bei Bedarf von der Polyester-Schicht einfach durch Abziehen entfernt werden ohne Rückstände zu hinterlassen. Überraschender Weise führt die Relaxierung der erfindungsgemäßen Folien (weiter unten beschrieben) dazu, dass die nach Abziehen der Polypropylen-Schicht oder -Schichten erhaltenen Polyesterfolien nur einen sehr geringen Wärmeschrumpf aufweisen.

Für die vorliegende Erfindung werden bevorzugt Polypropylene eingesetzt, die eine geringe Neigung zur Kristallisation aufweisen. Es handelt sich vorzugsweise um Polypropylen-Typen, die einen Anteil an copolymerisierten anderen Monomeren enthalten. In solchen Fällen sind im Polypropylen der vorliegenden Erfindung typischer Weise wenigstens 70 %, bevorzugt wenigstens 80 % und besonders bevorzugt wenigstens 90 % und ganz besonders bevorzugt wenigstens 95 % und am meisten bevorzugt wenigstens 96 % der Monomeren Propylen. So sind zum Beispiel Polymere geeignet, die neben Propylen-Monomeren andere alpha-Olefine enthalten, die zum Beispiel ausgesucht sind aus der Gruppe bestehend aus Ethylen, 1-Buten, 1-Penten und 1-Hexen. Ebenfalls geeignet sind Gemische (Blends) eines Polypropylens mit anderen Polymeren. Diese anderen Polymeren können zum Beispiel ausgesucht sein aus der Gruppe bestehend aus Olefin-Polymeren, Olefin-Copolymeren oder Olefin-Terpolymeren.

Bevorzugt sind erfindungsgemäße Folien bei denen es sich bei dem Polypropylen um ein Polypropylen-Ethylen-Copolymer handelt. Polypropylen-Ethylen-Copolymere weisen günstige Eigenschaften für die Co-Extrusion mit Polyestern auf und haben die notwendige Festigkeit und günstige Hafteigenschaften in den erfindungsgemäßen co-extrudierten Filmen. Besonders bevorzugt sind Polypropylen-Ethylen-Copolymere, die wenigstens 80 Gew.-% Polypropylen enthalten. Am meisten bevorzugt sind Polypropylen-Ethylen-Copolymere, die 85 bis 99 Gew.-% Polypropylen enthalten. Solche Polymere weisen besonders günstige Eigenschaften auf und erlauben es erfindungsgemäße Folien herzustellen, die eine geeignete Abzugsfestigkeit zwischen der Polypropylen-Schicht und der Polyesterschicht aufweisen.

Das Gewichtsmittel des Molekulargewichts des Polypropylens liegt bevorzugt in einem Bereich von 150.000 g/mol bis 500.000 g/mol, besonders bevorzugt in einem Bereich von 200.000 g/mol bis 480.000 g/mol und ganz besonders bevorzugt in einem Bereich von 250.000 g/mol bis 450.000 g/mol. Die Dichte des verwendeten Polypropylens beträgt bevorzugt 0,88 bis 0,92 g/cm3 und besonders bevorzugt 0,90 bis 0,92 g/cm3. Eine gute Extrudierbarkeit des Polypropylens zusammen mit dem Polyester wird in der Regel begünstigt, wenn das Polypropylen einen Schmelzflussindex (MFR; Melt Flow Range) von 6 bis 10 g/ 10 min bei 230 °C und einer Prüflast von 2,16 kg aufweist. Bevorzugt ist daher ein Polypropylen mit einem Schmelzflussindex im Bereich von 6 bis 10 g/10 min bei 230 °C, bevorzugt in Bereich von 7 bis 9 g/10 min bei 230 °C und besonders bevorzugt Bereich von 8 bis 9 g/10 min bei 230 °C. Am meisten bevorzugt weist das Polypropylen einen Schmelzflussindex von 8,5 g/10 min bei 230 °C auf, jeweils bei einer Prüflast von 2,16 kg. Gleiches gilt für das gesamte Material der Polypropylen-Schicht, wenn diese noch andere Bestandteile neben dem Polypropylen umfasst.

Polyester werden als Schichtmaterial gewählt, da sie einen guten Transmissionswert, eine geringe Trübung (Haze) und eine hohe mechanische Festigkeit und insbesondere einen vergleichsweise hohen Elastizitätsmodul aufweisen. Bevorzugt sind erfindungsgemäße Folien, worin der Polyester aus
(i) einem oder mehreren aliphatischen Diolen,
(ii) einer oder mehrerer aromatischer Dicarbonsäuren,
(iii)gegebenenfalls einer oder mehreren aliphatischen Dicarbonsäuren der Formel CₙH₂ₙ(COOH)₂, worin n = 2 bis 8 ist und
(iv) gegebenenfalls aus bis zu 5 Gew.-% anderer Monomeren besteht und worin die aromatischen Dicarbonsäuren in einer Menge von 80 bis 100 % in Bezug auf die Gesamtmenge aller Dicarbonsäuren im Ester enthalten sind. Solche Polyester sind besonders geeignet um Polyesterfolien mit sehr glatten Oberflächen herzustellen und sind geeignet für eine Reihe von kommerziellen Anwendungen.

Bei den aliphatischen Diolen handelt es sich bevorzugt um aliphatische und cycloaliphatische Diole mit bis zu 6 Kohlenstoffatomen, besonders bevorzugt mit bis zu 4 Kohlenstoffatomen. Am meisten bevorzugt sind Glykole und darunter wiederum sind Ethylenglykol, Propylenglykol und Butylenglykol bevorzugt. Am meisten bevorzugt ist Ethylenglykol. Bei den aromatischen Dicarbonsäuren handelt es sich bevorzugt um Benzoldicarbonsäuren und Naphtalindicarbonsäuren. Am meisten bevorzugt ist die Dicarbonsäure ausgesucht aus der Gruppe bestehend aus Terephthalsäure, Isophthalsäure, Phthalsäure, 1,4-, 2,5-, 2,6- und 2,7-Naphthalindicarbonsäuren. Am meisten bevorzugt ist Terephthalsäure. Die aliphatische Carbonsäure, wenn sie verwendet wird kann ausgesucht sein aus der Gruppe bestehend aus Bernsteinsäure, Glutarsäure, Adipinsäure, Pimelinsäure, Suberinsäure, Azelainsäure und Sebacinsäure.

Besonders bevorzugt handelt es sich bei dem Polyester um Polyethylenterephthalat. Polyethylenterephthalat wird derzeit bevorzugt in Folien eingesetzt, die sehr glatte und hochreine Oberflächen aufweisen müssen und in der Herstellung von Halbleitern aus organischen Materialien und anderen elektronischen Anwendungen Verwendung finden. Ganz besonders bevorzugt besteht das Polyester aus Polyethylenterephthalat. Am meisten bevorzugt besteht die Polyester-Schicht (B) aus Polyethylenterephthalat.

Die Dichte des verwendeten Polyesters beträgt bevorzugt 1,30 bis 1,50 g/cm³ und besonders bevorzugt 1,35 bis 1,45 g/cm³.

In einer besonders geeigneten Ausführungsform der erfindungsgemäßen Folie enthält die Polypropylen-Schicht wenigstens 80 Gew.-% eines Polypropylen-Polymeren, wobei es sich bei dem Polypropylen-Polymeren um ein Polypropylen-Ethylen-Copolymer handelt, das 85 bis 99 Gew.-% Polypropylen enthält und die Polyester-Schicht enthält wenigstens 70 Gew.-% eines Polyesters enthält, der als Monomere aliphatische Diole und aromatische Dicarbonsäuren umfasst. Ebenfalls besonders geeignet ist eine erfindungsgemäße Folie deren Polypropylen-Schicht wenigstens 90 Gew.-% eines Polypropylen-Polymeren enthält, wobei es sich bei dem Polypropylen-Polymeren um ein Polypropylen-Ethylen-Copolymer handelt, das 85 bis 99 Gew.-% Polypropylen enthält und die Polyester-Schicht wenigstens 80 Gew.-% eines Polyesters enthält, der als Monomere aliphatische Diole und aromatische Dicarbonsäuren umfasst.

In einer ebenfalls besonders geeigneten Ausführungsform der erfindungsgemäßen Folie enthält die Polypropylen-Schicht wenigstens 80 Gew.-% eines Polypropylen-Polymeren, wobei es sich bei dem Polypropylen-Polymeren um ein Polypropylen-Ethylen-Copolymer handelt, das 85 bis 99 Gew.-% Polypropylen enthält und die Polyester-Schicht enthält wenigstens 70 Gew.-% Polyethylenterephthalat. Ebenfalls besonders geeignet ist eine erfindungsgemäße Folie deren Polypropylen-Schicht wenigstens 90 Gew.-% eines Polypropylen-Polymeren enthält, wobei es sich bei dem Polypropylen-Polymeren um ein Polypropylen-Ethylen-Copolymer handelt, das 85 bis 99 Gew.-% Polypropylen enthält und die Polyester-Schicht enthält wenigstens 80 Gew.-% Polyethylenterephthalat.

In einer weiteren geeigneten Ausführungsform der erfindungsgemäßen Folie besteht die Polypropylen-Schicht aus Polypropylen-Ethylen-Copolymer, das 85 bis 99 Gew.-% Polypropylen enthält und die Polyester-Schicht aus Polyethylenterephthalat.

Die erfindungsgemäßen Folien können lediglich aus einer Polypropylen-Schicht (A) und einer Polyester-Schicht (B) bestehen (Schichtstruktur A-B). Bevorzugt sind aber erfindungsgemäße Folien, die eine A-B-A-Struktur aufweisen. In solchen Folien ist die Polyester-Schicht (B) auf beiden Oberflächen mit je einer Polypropylen-Schicht (A) versehen, die rückstandsfrei von der Polyester-Schicht (B) abgezogen werden können. Dies erlaubt es nicht nur, beide Oberflächen glatt und sauber bereitzustellen, dies erlaubt es auch Folien bereitzustellen, die Reinräume nicht durch mit Staub verschmutzte Rückseiten verunreinigen. Andere mögliche Kombinationen sind BAB, ABABA und alle möglichen Kombinationen aus den vorgenannten Schichtanordnungen.

Um den Transport der Folien auf den Verarbeitungsanlagen und insbesondere die Wickelbarkeit zu begünstigen, können die äußeren Schichten mit Antiblockmitteln versehen werden. Dies kann durch Zusatz der Antiblockmittel zu dem Schichtmaterial geschehen oder durch Beschichten der äußeren Schichten mit Antiblockmitteln. Insbesondere können die Polypropylen-Schichten (A) mit Antiblockmitteln versehen werden. Wenn ein Antiblockmittel mit dem Material einer Polypropylen-Schicht (A) gemischt wird, also darin tatsächlich oder annäherungsweise statistisch verteilt ist, bilden sich beim Extrudieren der Folie Abdrücke der Partikel der Antiblockmittel in der Polypropylen-Schicht (A) in der damit verbundenen Polyester-Schicht (B). Daher wird bei Folien mit A-B-A-Struktur bevorzugt nur einer der beiden Polypropylen-Schichten mit Antiblockmitteln versetzt. Dies führt dazu, dass nach Entfernen der Polypropylen-Schichten zumindest eine der Oberflächen der Polyester-Schicht die notwendige Glätte aufweist. Die andere Seite weist Unebenheiten auf, die jedoch dazu beitragen, dass die Polyester-Schicht (B) auch nach dem Entfernen der Polypropylen-Schichten (A) auf Transportrollen und dergleichen genügend Haftreibung aufweist um transportiert werden zu können. Ferner können die Unebenheiten zu Lufteinschlüssen beim Aufwickeln führen, was dazu führt, dass die erfindungsgemäßen Folien auch nach dem Entfernen der Polypropylen-Schichten (A) weiterhin wickeln lassen. Die Unebenheiten der Polyester-Schicht (B), die durch Antiblockmittel in der Polypropylen-Schicht (A) entstehen, können daher als Ersatz für Antiblockmittel in der Polyester-Schicht (B) fungieren.

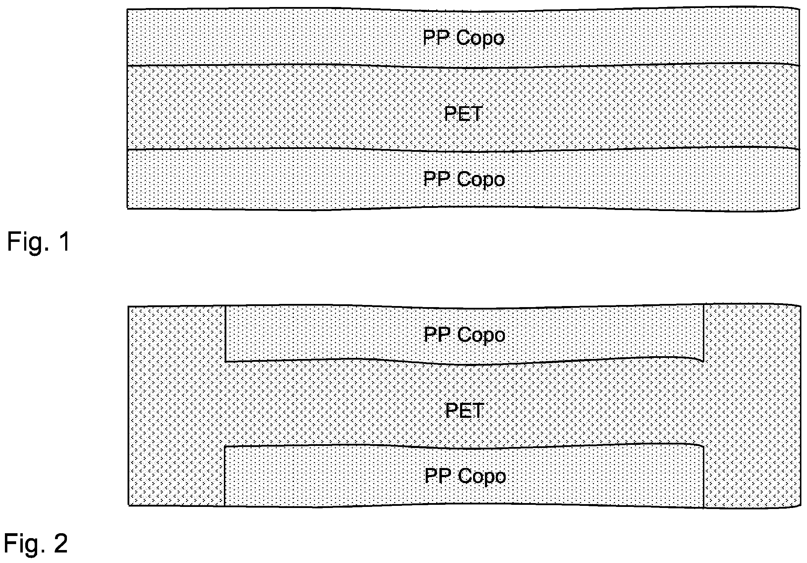

Der Aufbau der Lagen der Folien kann ferner so erfolgen, dass sich alle Schichten über die gesamte Breite der Folie erstrecken. Figur 1 zeigt eine Abbildung dieser Ausführungsform für erfindungsgemäße Folien mit A-B-A-Struktur. Ein Vorteil dieser Ausführungsform ist eine gute Verstreckbarkeit, weil kein Übergang zwischen Mono- und Mehrlagenbereich vorhanden ist (Kerbwirkung) und weil ferner die Krafteinleitung gleichmäßig entlang der gesamten Folienbreite ist. Es tritt daher nur sehr geringe oder keine Delamination auf. Alternativ kann sich jedoch nur die Polyester-Schicht (B) über die ganze Breite der Folie erstrecken. In diesem Fall weisen die Polypropylen-Schichten (A) auf beiden Seiten der erfindungsgemäßen Folie einen Abstand zum Rand der Folie auf. Figur 2 zeigt eine Abbildung dieser Ausführungsform für erfindungsgemäße Folien mit A-B-A-Struktur. Da die Randstreifen nach Herstellung der Folie abgeschnitten und verworfen werden, wird so eine gleichmäßig dicke Folie erhalten, in denen sich alle Schichten bis zu den Rändern der Folie erstrecken (siehe Figur 1).

Bevorzugt weist die Polypropylen-Schicht (A) der erfindungsgemäßen Folie eine Dicke von wenigstens 5 µm auf. Polypropylen-Schichten (A) mit einer geringeren Dicke reißen leicht bei dem Abziehen und erschweren so das Entfernen der Polypropylen-Schicht (A). Besonders bevorzugt weist die Polypropylen-Schicht (A) der erfindungsgemäßen Folie eine Dicke von wenigstens 7 µm auf. Mit einer solchen Dicke ist die Polypropylen-Schicht robust genug um auch in schnellen industriellen Verfahren ohne Probleme abgezogen zu werden. Am meisten bevorzugt weist die Polypropylen-Schicht der erfindungsgemäßen Folie eine Dicke von wenigstens 8 µm auf. Ferner weist die Polypropylen-Schicht der erfindungsgemäßen Folie bevorzugt eine Dicke von höchstens 15 µm auf. Bei größeren Dicken ist es schwierig, die Polypropylen-Schicht und die darunterliegende Polyester-Schicht genügend schnell abzukühlen. Die Polypropylen-Schicht kristallisiert daher bei großen Dicken teilweise, was zu Unebenheiten auf der angrenzenden Polyester-Schicht führen kann. Gleichzeitig leidet die Verarbeitbarkeit, insbesondere können beim Recken unregelmäßig gereckte Stellen entstehen. Die Nachteile der Kristallisation können jedoch durch Zugabe von alpha-Nukleierungsmitteln gelindert oder sogar verhindert werden. Solche Mittel sorgen dafür, dass viele kleine Kristalle entstehen anstatt weniger großer Kristalle. So können trotz einer gewissen Kristallisation glatte Oberflächen und gut verarbeitbare Folien erhalten werden. Zu dicke Folien wirken jedoch ferner wie ein Isolator. Bei erfindungsgemäßen Folien, die eine A-B-A-Struktur mit dicken Polypropylen-Schichten A aufweist, wird daher mehr Energie und/oder mehr Zeit benötigt, um die zentrale PET-Schicht B vor dem Recken aufzuwärmen. Am meisten bevorzugt weist die Polypropylen-Schicht (A) der erfindungsgemäßen Folie eine Dicke von höchstens 10 µm auf. Die Kühlung wird so weiter verbessert und je dünner die Schicht, umso geringer der anfallende Abfall und umso wirtschaftlicher lassen sich die Folien herstellen. Daher weist die erfindungsgemäße Polypropylen-Schicht (A) der erfindungsgemäßen Folie bevorzugt eine Dicke im Bereich von 5 µm bis 15 µm auf und besonders bevorzugt im Bereich von 8 µm bis 10 µm.

Die Polyester-Schicht (B) weist bevorzugt eine Dicke im Bereich von 30 µm bis 200 µm auf. Besonders bevorzugt liegt die Dicke im Bereich von 30 bis 100 µm und am meisten bevorzugt im Bereich von 30 bis 80 µm.

Die erfindungsgemäßen Folien erzeugen nach Entfernen der Polypropylen-Schicht (A) eine Oberfläche auf der Polyester-Schicht (B), die außerordentlich glatt ist. Es ist bevorzugt, wenn die der Polypropylen-Schicht (A) zugewandte Seite der Polyester-Schicht (B) nach dem Abziehen der Polypropylen-Schicht (A) eine Oberflächenrauheit Ra von höchstens 25 nm, besonders bevorzugt von höchstens 10 nm und am meisten bevorzugt von höchstens 5 nm aufweist. Ebenfalls bevorzugt ist es, wenn die der Polypropylen-Schicht (A) zugewandte Seite der Polyester-Schicht (B) nach dem Abziehen der Polypropylen-Schicht (A) eine Oberflächenrauheit Rz von höchstens 100 nm, besonders bevorzugt von höchstens 60 nm und am meisten bevorzugt von höchstens 30 nm aufweist. Besonders glatte Oberflächen ergeben nach Beschichtung mit Barriereschichten (siehe unten) besonders gute Barriereeigenschaften, da die Barriereschichten beim Auftragen auf glatte staubfreie reine saubere defektfreie Oberflächen besonders wenig Fehlstellen aufweisen.

Bei der erfindungsgemäßen Folie kann es sich um eine simultan biaxial orientierte Folie handeln oder um eine sequentiell biaxial orientierte Folie. Details dazu sind weiter unten in Zusammenhang mit dem Herstellungsverfahren der erfindungsgemäßen Folie beschrieben. Die Polyester-Schicht (B) der erfindungsgemäßen Folie weist nach Entfernen der Polypropylen-Schicht (A) oder -Schichten (A) einen sehr geringen Schrumpf auf. Bevorzugt sind erfindungsgemäße Folien, die dadurch gekennzeichnet sind, dass die Polyester-Schicht (B) nach dem Abziehen der Polypropylen-Schicht (A) einen Schrumpf in Querrichtung von höchstens 3 %, besonders bevorzugt von höchstens 1,5 %, ganz besonders bevorzugt von höchstens 0,5 % und am meisten bevorzugt von höchstens 0,2 % aufweist, jeweils bei 150 °C für 30 Minuten. Gleiches gilt für den Schrumpf in Längsrichtung der Polyester-Schicht (B) nach dem Abziehen der Polypropylen-Schicht (A) für eine erfindungsgemäße simultan biaxial verstreckte Folie. Bei einer erfindungsgemäßen sequentiell biaxial orientierte Folie ist der Schrumpf in Längsrichtung üblicherweise etwas größer. Ebenfalls bevorzugt ist eine erfindungsgemäße sequentiell biaxial orientierte Folie, die dadurch gekennzeichnet ist, dass die Polyester-Schicht (B) nach dem Abziehen der Polypropylen-Schicht (A) oder -Schichten (A) einen Schrumpf in Längsrichtung von höchstens 4 %, besonders bevorzugt von höchstens 3 %, ganz besonders bevorzugt von höchstens 1,0 % und am meisten bevorzugt von höchstens 0,5 % aufweist, jeweils bei 150 °C für 30 Minuten. Die dimensionale Stabilität bei hohen Temperaturen macht die Folien besonders geeignet für Anwendungen im Bereich der Elektronik bei denen Formveränderung durch Wärmeentwicklung für gewöhnlich ein Problem darstellt.

Die nach dem Abziehen der Polypropylen-Schicht (A) oder Schichten (A) verbleibenden Polyester-Schichten (B) weisen im Übrigen auch vorteilhafte optische Eigenschaften auf. Bevorzugt sind erfindungsgemäße Folien, die dadurch gekennzeichnet sind, dass die Polyester-Schicht (B) nach dem Abziehen der Polypropylen-Schicht (A) eine Trübung (Haze) von höchstens 3 %, bevorzugt von höchstens 1 % und am meisten bevorzugt von höchstens 0,5 % aufweist. Ebenfalls bevorzugt sind erfindungsgemäße Folien, bei denen die Polyester-Schicht (B) nach dem Abziehen der Polypropylen-Schicht (A) oder der -Schichten (A) einen Transmissionswert (Transmittance) von wenigstens 80 %, bevorzugt von wenigstens 85 % und am meisten bevorzugt von wenigstens 90 % aufweist.

Die erfindungsgemäße Folie kann ferner Hilfsstoffe (Zusatzstoffe) umfassen. Diese können sowohl in der Polypropylen-Schicht als auch der Polyester-Schicht enthalten sein. Die Hilfsstoffe können ausgesucht sein aus der Gruppe bestehend aus alpha-Nukleierungsmitteln, Antiblockmitteln, Haftvermittlern, Dispergiermitteln, Stabilisierungsmitteln, Gleitmitteln, Antistatikmitteln, feste Weichmachermittel, Aktivierungsmitteln, Promotoren, Alterungsschutzmitteln, Mitteln zur Vorbeugung von Brandflecken, Bindemitteln, hitzebeständigen Mitteln, Initiatormitteln, Polymerisationskatalysatoren, Emulgatoren, Weichmachern, Wärmestabilisatoren, Lichtstabilisatoren, insbesondere UV-Schutzmitteln, Pigmenten, insbesondere Titandioxid, Flammschutzmitteln, Hydrolysestabilisatoren und Formtrennmitteln. Dispergiermittel erlauben das Recken von Folien mit hohem Anteil an Füllstoff (zum Beispiel Antiblockmitteln). Ferner weisen Folien die Dispergiermittel enthalten besonders gleichmäßige Dicken auf. Die Polypropylen-Schicht (A) als auch die Polyester-Schicht (B) können bis zu 20 Gew-% Hilfsstoffe enthalten. Wenn diese Hilfsstoffe enthalten sind, enthält die erfindungsgemäße Folie bevorzugt Hilfsstoffe in einer Menge im Bereich von 1 bis 15 Gew.-% und besonders bevorzugt im Bereich von 1 bis 5 Gew.-%. Wenn die Folie Streckmittel enthält, sind diese bevorzugt ausgesucht aus der Gruppe bestehend aus Polyethylenwachsen und Polypropylenwachsen. Bevorzugt sind Polypropylenwachse. Geeignet sind zum Beispiel kommerziell erhältliche Polyethylenwachse und Polypropylenwachse vom Typ Licocene® der Firma Clariant in Frankfurt/Main, Deutschland. Bevorzugt enthält jedoch Polyester-Schicht nur solche Hilfsstoffe, die für die spätere Anwendung nach Entfernung der Polypropylen-Schutzschicht notwendig sind. Bevorzugte Hilfsstoffe sind ausgesucht aus der Gruppe bestehend aus UV-Schutzmitteln, Hydrolysestabilisatoren und Pigmenten. Eine bevorzugte Kombination von Hilfsstoffen besteht aus UV-Schutzmitteln, Hydrolysestabilisatoren und Titandioxid.

Es ist ein Vorteil der vorliegenden Erfindung, dass der Polyester-Schicht (B) keine Hilfs- oder Zusatzstoffe hinzugefügt werden müssen, um die erfindungsgemäßen Folie herzustellen und verarbeiten zu können. Die Polypropylen-Schicht (A) kann beliebige Zusatzstoffe enthalten, so lange sie nicht die Vorteile der vorliegenden Erfindung negieren. Bevorzugt enthält sie jedoch ausschließlich Antiblockmittel und/oder alpha-Nukleierungsmittel und besonders bevorzugt überhaupt keine Hilfs- oder Zusatzstoffe.

### Herstellungsverfahren

Die erfindungsgemäße Folie ist eine Mehrlagenfolie. Sie kann, insbesondere in Form einer Dreilagenfolie auf an sich bekannte Weise so hergestellt werden, dass eine mehrschichtige Schmelze coextrudiert und die dabei erhaltene mehrschichtige Schmelze zu ihrer Verfestigung auf eine Kühlwalze gegossen wird. Anschließend wird die Folie gereckt. Dies kann durch simultanes Recken oder durch sequenzielles Recken geschehen. Wenn simultan gereckt wird, wird dies bevorzugt mittels einer nachfolgend noch abgehandelten simultanen Reckanlage durchgeführt.

Ein weiterer Gegenstand der vorliegenden Erfindung ist daher ein Verfahren zur Herstellung einer erfindungsgemäßen Folie, umfassend die Schritte:
- Schmelzen des Materials für die Polyester-Schicht oder -Schichten (B),
- Schmelzen des Materials für die Polypropylen-Schicht oder -Schichten (A),
- Co-Extrudieren der Schmelzen unter Herstellung einer mehrschichtigen Schmelze,
- Kühlen der so entstandenen mehrschichtigen Schmelze auf einer Kühlwalze unter Herstellung eines Castfilms, wobei die Kühlwalze eine Temperatur von höchstens 40 °C aufweist,
- Simultanes oder sequenzielles Recken des so entstandenen Films in Längsrichtung und in Querrichtung, wobei das Reckverhältnis in Längsrichtung und in Querrichtung 2,5 bis 7 beträgt,
- Durchführen einer Wärmebehandlung bei Temperaturen im Bereich von 160 bis 230 °C.

Die Kühlwalze wird auch als "Chillroll" bezeichnet. Wenn der Film die Kühlwalze (Chillroll, Abkürzung CR)) verlässt, hat sich ein sogenannter "Castfilm" gebildet, der dann üblicherweise in einen Ofen zur Temperierung des Filmes einläuft. Danach wird üblicherweise nicht mehr von einem "Castfilm" sondern nur noch von einem "Film" oder "Kunststofffilm" gesprochen. Am Ende des gesamten Reckprozesses und in der Regel nach Durchführung einer Relaxationsphase, wenn also der Film vollständig verstreckt ist und aus dem Ofen kommt und auf einem Wickler aufgewickelt wird, wird häufig nur noch von "Folie" gesprochen.

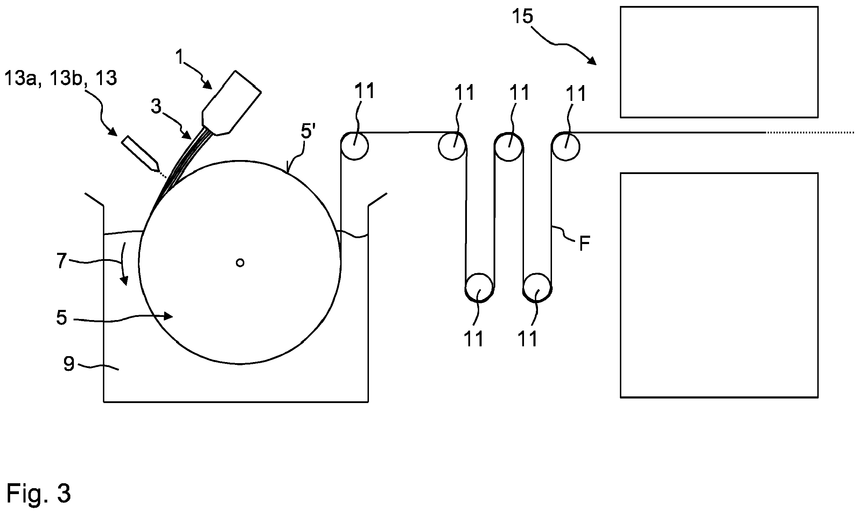

In Figur 3 ist schematisch gezeigt, wie im Rahmen der Coextrusion eine Mehrlagenschmelze an eine Kühlwalze übergeben wird. Dazu ist eine Breitschlitzdüse 1, üblicherweise eine Mehrlagen-Breitschlitz-Düse 1, die auch als Flachdüse bezeichnet werden kann, in schematischer Seitenansicht gezeigt. Während bevorzugt eine Mehrlagen-Breitschlitz-Düse 1 verwendet wird können stattdessen auch alle anderen dem Fachmann bekannten Arten von Düsen verwendete werden, die zum Formen einer Mehrlagenfolie führen. So kann zum Beispiel mit gleichem Effekt auch eine Einlagen-Düse und vorgeschaltetem Mehrlagen-Adapter verwendet werden. Vom Düsenaustritt wird die MehrlagenSchmelze 3 auf den Walzenmantel 5' der Kühlwalze 5 oder Cast-Walze 5 übergeben, die sich beispielsweise in Rotationsrichtung 7 dreht. Vorteilhaft werden die Materialien in einem Hauptextruder und in einem oder mehreren Co-Extrudern aufgeschmolzen und die Schmelze wird dann über separate Schmelzeleitungen zur Mehrlagen-Breitschlitz-Düse 1 oder zum Düsenadapter geleitet.

Die Extrusionstemperatur der Polypropylen-Schicht (A) muss so gewählt werden, dass das Dickenprofil im Castfilm möglichst gleichmäßig ist. Dies hängt auch von der Art des Materials der Polypropylen-Schicht, insbesondere vom Polymerisationsgrad und der Menge von Co-Monomeren oder hinzugemischten Polymeren und Hilfsstoffen, und der Anlage ab und muss in Vorversuchen ausprobiert werden, in dem die Temperatur variiert wird und das Dickenprofil gemessen wird. Die Temperatur beträgt jedoch in der Regel 200°C bis 260°C, bevorzugt 230°C bis 260°C. Eine hohe Schmelzetemperatur erlaubt eine gleichmäßige Verteilung der Polymere über die ganze Breite der Mehrlagen-Breitschlitz-Düse 1. Die Extrusionstemperatur der Polyester-Schicht hängt von dem verwendeten Polyester ab und von der gewählten Zusammensetzung der Folie. Die Temperatur beträgt jedoch in der Regel 200°C bis 300°C, bevorzugt 220°C bis 290°C. Wenn es sich bei dem Polyester um Polyethylenterephthalat handelt, beträgt die Temperatur in der Regel 250°C bis 300°C, bevorzugt 260°C bis 290 °C.

Das zügige Abkühlen der Folie ist ein wichtiges Merkmal der vorliegenden Erfindung, da durch ein schnelles Abkühlen die Kristallisation in der Polypropylen-Schicht (A) verlangsamt wird. Aus diesem Grund soll die Kühlwalze eine Temperatur von nicht mehr als 40°C aufweisen. Bevorzugt weist die Kühlwalze eine Temperatur von nicht mehr als 25°C auf. Am meisten bevorzugt sind 20°C oder weniger. Die Temperatur sollte jedoch nicht so gering sein, dass zu viel Luftfeuchtigkeit darauf kondensiert. Sie muss daher auch auf Temperatur und die relative Luftfeuchtigkeit der Umgebungsluft abgestimmt sein. In der Regel lässt sich eine solche Temperatur einfach durch Kühlen der Kühlwalze mit Wasser unter Durchleiten des Wassers durch Kühlkörper im Inneren der Kühlwalze einstellen. Zusätzlich kann die Kühlwalze in ein Wasserbad eingetaucht werden, um die der Kühlwalze abgewandte Seite der Folie zu kühlen. Dies ist insbesondere vorteilhaft, wenn die Polyester-Schicht (B) beidseitig mit Polypropylen beschichtet ist. Dies hat jedoch in der Regel den Nachteil, dass die Folie anschließend getrocknet werden muss. Es lassen sich jedoch auch gute Ergebnisse erhalten, wenn kein Wasserbad verwendet wird. Alternativ oder zusätzlich können auch alpha-Nukleierungsmittel Verwendung finden. Bevorzugt sind dabei erfindungsgemäße Verfahren und Folien, in denen die Polyester-Schicht (B) beidseitig mit einer Polypropylen-Schicht (A) beschichtet ist (A-B-A-Struktur) und in denen ausschließlich der der Kühlwalze abgewandten Polypropylen-Schicht (A) alpha-Nukleierungsmittel zugegeben werden.

Nach der Kühlwalze und vor der Verstreckung oder bei Verwendung eines Wasserbades nach dem Wasserbad und vor der Verstreckung kann die Kühlwalze einer Maßnahme zur Zugtrennung unterzogen werden.

Wenn zum Kühlen zusätzlich ein Wasserbad 9 eingesetzt wird, kann die Kühlwalze 5 in einem Wasserbad 9 drehbar gelagert werden, wobei üblicherweise die Kühlwalze 5 mit mehr als der Hälfte ihres Volumens in das Wasserbad eintaucht. Eine entsprechende Kühlwalze ist beispielsweise aus der DE 197 05 796 C2 bekannt. Derartige Kühlwalzen werden auch von innen her gekühlt.

Nachdem die Schmelze durch die Kühlwalze und gegebenenfalls durch das Wasserbad entsprechend abgekühlt wurde, taucht der so aus der Schmelze gebildete Castfilm in Abzugsrichtung zur Mehrlagen-Breitschlitz-Düse 1 nachlaufend gegebenenfalls aus dem Wasserbad 9 auf. Er kann danach über eine Vielzahl von Umlenkwalzen 11 weiter transportiert werden, die sich üblicherweise in Gruppen von oberen und unteren Umlenkwalzen 11 gliedern, die einen mäanderförmigen Transportweg für den Film ergeben. Die Verwendung der Umlenkwalzen kann zum Beispiel der Zugtrennung dienen. In diesem Bereich kann der Film aber auch noch einer weiteren Kühl- und/oder Wärmebehandlung unterzogen werden, um ihn zu stabilisieren, bevor der Einlaufbereich einer nachfolgenden Reckanlage 15 zugeführt wird.

Um eine möglichst optimale Anlage der aus der Mehrlagen-Breitschlitz-Düse 1 austretenden Schmelze auf dem Walzenmantel 5' der Kühlwalze 5 zu erzielen, können verschiedene Maßnahmen eingesetzt werden.

In Figur 3 ist dazu der Austrittsöffnung der Mehrlagen-Breitschlitz-Düse 1 in Rotationsrichtung der Kühlwalze 5 nachgeordnet eine Einrichtung 13 zur Verbesserung der Anlage der Schmelze an den Walzenmantel 5' der Kühlwalze 5 vorgesehen, die aus unterschiedlichen Mittel bestehen und dabei gegebenenfalls auch mehrere Maßnahmen umfassen kann.

Bei Anlegen der Kunststoff-Schmelzefahne an den Kühlkörper ist darauf zu achten, dass ein möglichst guter Wärmeübergang zwischen der Polymerschmelze und dem Kühlkörper erreicht wird, vor allem, dass keine oder so wenig Lufteinschlüsse wie möglich auftreten. Ansonsten würde dies an den Stellen der Lufteinschlüsse zu einem schlechteren Wärmeübergang zwischen Kühlkörper und Schmelze und so zu einer geringeren Abkühlgeschwindigkeit an diesen Stellen führen. Ferner käme es zu einem ungleichmäßigen Wärmetransport und damit zu einer ungleichmäßigen Kristallisation in der Folie. Neben den erwähnten Lufteinschlüssen ergeben sich weitere nachteilige Effekte wie das Auftreten einer welligen Oberfläche, einer schlechten Dickentoleranz nach dem Verstrecken etc. All diese die Folien in ihrer Qualität nachteilig beeinflussenden Ursachen schlagen sich auch nachteilig auf die weitere Verwendung der Folien nieder.

Im Rahmen der Erfindung wird bevorzugt vorgeschlagen den aus einer Mehrfach-Breitschlitz-Düse austretenden mehrlagigen Schmelzefilm mittels eines sogenannten elektrostatischen Pinnings an die Kühlwalze 5 anzupressen. Beim elektrostatischen Pinning wird die Schmelzefahne, die aus einer Düse austritt, durch eine Flächenladungskraft auf der Kühlwalze 5 angelegt, um einen guten Wärmekontakt zu gewährleisten und die Schmelze zu fixieren. Als Einrichtung 13 zur Verbesserung des Anlegeverhaltens der Schmelze 3 an der Kühlwalze 5 wird in diesem Fall also eine Pinning-Elektrode 13b in einem geringen Abstand zur Schmelzefahne auf Hochspannung gelegt, während die Kühlwalze 5 auf Erde liegt.

Eine alternative Anlegemöglichkeit ist das Anpressen der Schmelze an die Kühlwalze mittels Luftmesser unter Erzeugung einer ausreichenden Luftgeschwindigkeit (Staudruck). Wird also als Einrichtung 13 ein Luftmesser 13a verwendet, so soll sich dieses Luftmesser 13a mit seiner Längsausrichtung quer zum Schmelzefilm erstrecken, also quer und insbesondere senkrecht zur Abzugsrichtung der Kunststofffolie. Erstrecken sich die Polypropylen-Schichten (A) (Skinlayer) nicht über die gesamte Breite des Schmelzefilms so wird im Rahmen der Erfindung ein elektrostatisches Pinning bevorzugt. Die Verwendung eines Luftmessers ist vor allem dann eine sinnvolle Alternative zum elektrostatischen Pinning, wenn sich die Polypropylen-Schichten (A) (Skinlayer) über die gesamte Breite des Schmelzefilms erstrecken.

Neben dem Erzeugen eines Luftdrucks, worüber die Schmelzefahne an den Kühlkörper angedrückt wird, ist es alternativ oder ergänzend auch möglich, einen Unterdruck zu erzeugen. Dieser Unterdruck wird zwischen der Walze und der Schmelzefahne erzeugt, wodurch die Schmelzefahne an den Kühlkörper angedrückt wird.

Um den entstandenen Castfilm anschließend von der Kühlwalze 5 abzuheben und einem nachfolgenden Ofen zuzuführen existieren verschiedene Methoden, die alle eine effektive Zugtrennung ermöglichen sollten, um spannungsinduzierte Risse im Film zu vermeiden. In der Regel wird dazu der Castfilm über eine Reihe von oberen und unteren Umlenkwalzen 11 geführt, die in Abzugsrichtung des Castfilms versetzt zueinander angeordnet sind. Anschließend wird der Film F dann an eine Reckanlage übergeben, auf die nachfolgend eingegangen wird. Es kann jedoch auch eine einfache sogenannte "Take-Off-Walze" verwendet werden. Falls ein Wasserbad verwendet wird, muss auch das Wasser von den Oberflächen der Folie entfernt werden, was zum Beispiel durch abblasen geschehen kann.

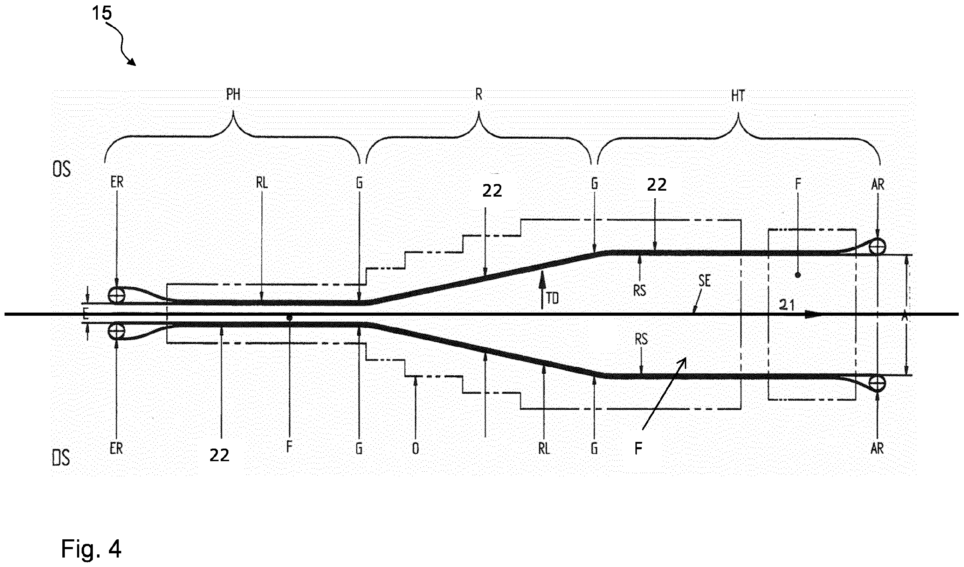

Die erfindungsgemäße Folie kann simultan oder sequenziell gereckt werden. Wird sie simultan gereckt, so wird bevorzugt eine Simultan-Reckanlage 15 verwendet, die im Folgenden beschrieben wird. Eine Simultan-Reckanlage 15 weist zwei symmetrisch ausgebildete Antriebssysteme auf, die symmetrisch zu einer mittleren, vertikal zur Folienebene verlaufenden Symmetrie-Ebene SE liegen. In Figur 4 sind die beiden symmetrisch zur Symmetrieebene SE in Abzugsrichtung 21 angeordneten Antriebssysteme eingezeichnet, wobei zwischen den beiden auf geschlossenen Bahnen 22 umlaufenden Antriebssystemen die zu behandelnde, d.h. zu reckende Materialbahn insbesondere in Form eines Kunststofffilms F längs der Abzugsrichtung 21 hindurch bewegt wird. Dazu werden Kluppen verwendet, die den Filmrand ergreifen und den Film F durch die Reckanlage 15 hindurchbewegen.

Eine unverstreckte Folie F läuft in einem Einlaufbereich, einer sogenannten Einlaufzone, mit einer Filmbreite E in die Reckanlage 15 ein und wird dort auf der Reck- oder Prozessseite RS von Kluppen an beiden Rändern ergriffen und eingeklemmt, und zwar auf der sogenannten Operator-Seite (OS operator side; bei Draufsicht auf die Folie in Laufrichtung links) sowie der antriebsseitigen Drive-Seite (DS drive side; bei Draufsicht auf die Folie in Laufrichtung rechts). Die Folie F wird dann in einer nachfolgenden Vorheizzone PH erwärmt und nachfolgend einer Reckzone R zugeführt, um hier simultan in Längs- und Querrichtung verstreckt zu werden. Dabei werden die Kluppen gegenüber der Antriebsgeschwindigkeit v1 im Einlaufbereich auf eine höhere Geschwindigkeit v2 in Abzugsrichtung 21 beschleunigt, um den Kunststofffilm gleichzeitig in Längsrichtung zu recken. Zudem werden die Kluppen auf divergierenden Bahnabschnitten voneinander weg bewegt, wodurch der Abstand x in Abzugsrichtung 21 zwischen zwei aufeinanderfolgenden Kluppen wie aber auch der Abstand y in Querrichtung zur Abzugsrichtung zwischen den Kluppen zunimmt, wenn sie auf den zugehörigen Bahnen 22 auf der Drive-Seite zum einen und auf der Operator-Seite zum anderen verfahren werden. Damit nimmt also auch der Abstand y zwischen den gegenüberliegenden Seitenrändern des Kunststofffilms zu. Mittels Gelenken G kann der Verlauf der Führungsbahn 22 vor allem im Bereich der Reckzone R entsprechend den gewünschten und optimalen Vorgaben eingestellt werden. Die Führungsschienen können ferner durch einen Ofen O verlaufen, welcher in verschiedene Zonen aufgeteilt ist (PH, R, HT) um die Folie entsprechend zu erwärmen.

Die Abstände x und y werden dabei im Verhältnis der gewünschten Reckverhältnisse in Längs- und Querrichtung vergrößert. Nach der Verstreckung hat die Folie eine Geschwindigkeit v2, die über der Geschwindigkeit v1 liegt.

Anschließend durchläuft der verstreckte Film F in einem weiteren Schritt zumindest eine Wärmebehandlungszone HT, d.h. eine sogenannte Annealingzone, in der eine Relaxierung erfolgen kann. Dazu wird die Geschwindigkeit v2 etwas verlangsamt und so der Abstand x von jeweils aufeinander folgenden Kluppen in der Regel wiederum zumindest etwas verringert. Gleichzeitig kann der Abstand y von gegenüberliegenden Kluppen verringert werden. Die Geschwindigkeit v2 und der Abstand y werden dabei im Ausmaß der gewünschten Relaxierung verringert.

Beim simultanen Recken wird die Folie innerhalb des Simultan-Reckofens bevorzugt auf eine Temperatur im Bereich von 80°C bis 120°C erwärmt, besonders bevorzugt auf eine Temperatur im Bereich von 85°C bis 110°C.

Beim sequentiellen Recken erfolgt das Recken der Folie zweistufig, im ersten Schritt wird die Folie beim Recken in Längsrichtung (MD) bevorzugt auf eine Temperatur von 65°C bis 120°C erwärmt, besonders bevorzugt auf eine Temperatur im Bereich von 70°C bis 100°C. Anschließend wird sie dann zum Recken in Querrichtung (TD) auf eine Temperatur im Bereich von 80°C bis 120 °C erwärmt, besonders bevorzugt auf eine Temperatur im Bereich von 85°C bis 110°C.

Während der Wärmebehandlung wird der Film vorteilhaft einer Entspannung (Relaxierung) unterzogen. Dies bedeutet, dass der Film erlaubt wird, kontrolliert zu schrumpfen. Diese Relaxierung kann in Längsrichtung, in Querrichtung oder in beiden Richtungen vorgenommen werden. Bevorzugt wird sie sowohl in Längs- als auch in Querrichtung vorgenommen. Bevorzugt ist daher ein erfindungsgemäßes Verfahren, das dadurch gekennzeichnet ist, dass während der Wärmebehandlung eine Relaxierung in Längsrichtung oder in Querrichtung oder in beiden Richtungen vorgenommen wird. Der Umfang der Relaxierung beträgt üblicherweise zwischen 2 % und 12 %, bevorzugt zwischen 4 % und 12 % und ganz besonders bevorzugt 5 % bis 12 % beträgt, jeweils bezogen auf das jeweilige Reckverhältnis. Das jeweilige Reckverhältnis ist dabei das Reckverhältnis in derselben Richtung wie die Relaxierung. Der Umfang der Relaxierung in Längsrichtung ist daher bezogen auf das Reckverhältnis in Längsrichtung und der Umfang der Relaxierung in Querrichtung ist bezogen auf das Reckverhältnis in Querrichtung. Eine hohe Relaxierung hat dabei einen besonderen Effekt. Nach Abziehen aller Polypropylen-Schichten (A) weist die dabei entstehende Polyester-Folie (B) einen besonders geringen Wärmeschrumpf auf.

Am Auslaufende AR der Simultan-Reckanlage 15, d.h. am Ende der sogenannten Auslaufzone, wird der eine Filmbreite A aufweisende Film F durch geeignete Mittel ausgekluppt und verlässt dann die Simultan-Reckanlage 15.

Die Kluppen werden dann wieder zur Einlaufzone zurückverfahren. Wird als Simultan-Reckanlage 15 ein Pantographsystem verwendet, dann werden üblicherweise die Kluppen über ein entsprechendes Kettensystem über Umlenkräder ER in der Einlaufzone und Umlenkräder AR in der Auslaufzone angetrieben. Wird eine Simultan-Reckanlage 15 verwendet, bei der die Kluppen mittels eines Linearmotors angetrieben werden, dann durchlaufen die Kluppen entsprechende bogenförmige Bahnabschnitte ER und AR.

Soll die Folie sequenziell gereckt werden, so kann sie entweder zuerst in Längsrichtung und dann in Querrichtung verstreckt werden, oder der Reckvorgang erfolgt in umgekehrter Reihenfolge, bei der die Folie in einem ersten Schritt in Querrichtung gereckt wird, um dann in einem nachfolgenden Schritt die Folie noch in Längsrichtung zu strecken. Es wird insoweit auf bekannte Vorrichtungen und Verfahren verwiesen, wie sie im vorveröffentlichten Stand der Technik hinlänglich bekannt sind.

Bevorzugt wird dabei das Recken in Längsrichtung mittels einer üblichen sequenziellen Reckanlage mit einem Walzensystem in Längsrichtung (MD) gestreckt. Hierbei wird bevorzugt die Geschwindigkeit aufeinander folgender Walzen durch einen Walzenantrieb sukzessive erhöht, so dass die Folie gereckt wird. Das Recken in Querrichtung wird üblicherweise in einem Querreckofen für das sequenzielle Recken durchgeführt. Im Prinzip kann das Recken in Längs- und/oder Querrichtung auch in der vorstehend beschriebenen Simultan-Reckanlage 15 durchgeführt werden. Zu ausschließlichen Recken in Querrichtung werden Führungsbahnen 22 so ausgerichtet, dass sich der Abstand y von gegenüberliegenden Kluppen soweit vergrößert, damit das gewünschte Reckverhältnis in Querrichtung erreicht wird. Die Geschwindigkeit V2 ist dabei jedoch in etwa gleich der Antriebsgeschwindigkeit v1, so dass kein Recken in Längsrichtung auftritt.

Das Reckverhältnis kann im vorliegenden Verfahren deutlich größer sein als dies für reine Polyesterfolien in der Regel möglich ist. Eine gute Planlage wird durch eine ausreichend langsame Abkühlung der Folie zwischen Annealing und Ofenauslauf unterstützt. Wenn sich in den erfindungsgemäßen Folien alle Schichten bis zum Rand der Folie erstrecken (siehe zum Beispiel Figur 1), kann das Reckverhältnis bis zu 7 in beide Richtungen betragen. Bis zu 6 in beide Richtungen wird jedoch bevorzugt. Wenn sich jedoch nur die Polyester-Schicht bis zum Rand der Folie erstreckt (siehe zum Beispiel Figur 2), beträgt das Reckverhältnis bevorzugt nicht mehr als 4,5 in beide Richtungen. Daneben können verschiedenste Reckprofile eingesetzt werden, in denen in Längs- und in Querrichtung unterschiedliche Reckverhältnisse eingesetzt werden. Bevorzugt werden auch dabei Reckverhältnisse im Bereich von 2,5 bis 7.

Als gute Planlage bezeichnet man eine hohe Planarität bei Folienprodukten, also einer geringen Neigung zur Bildung von Beulen, durchhängenden Bereichen oder Aufwölbungen. Die Planlage einer Folie ist ein wichtiges Qualitätskriterium, da diese die Geschwindigkeit von Folgeprozessen sowie die Verwendbarkeit der Folie in hochwertigen Endprodukten teilweise erheblich beeinträchtigen kann und eine schlechte Planlage somit oft als Kriterium für die Klassifizierung als Ausschussproduktion herangezogen wird.

Zur Ermittlung der Planlage kann in einfacher Weise der bloße Augenschein genügen. Als Testmethode wird erfindungsgemäß die Methode ASTM D1604 herangezogen, bei der die Folie in 50 mm breite Streifen geschnitten wird, deren Länge einzeln vermessen wird. Die Längenunterschiede der einzelnen Streifen sind dabei ein Maß für die Planlage der Folie, insbesondere für Beulenbildung und durchhängende Bereiche.

Bei der Wärmebehandlung sind Temperaturen von 160°C bis zu 230 °C bevorzugt. Höhere Temperaturen sind meist nicht notwendig, können zum Schmelzen des Polypropylens führen und führen zur Energieverschwendung. Bei Temperaturen unterhalb von 160 °C ist eine genügende Relaxierung meist nicht möglich. Die Temperatur muss im Übrigen an die Art der verwendeten Polymere angepasst werden. Gegebenenfalls muss die am besten geeignete Temperatur durch Vorversuche ermittelt werden. Bei sequenziellem Recken wird die Wärmebehandlung bevorzugt erst nach Abschluss aller Reckvorgänge durchgeführt. Es kann aber auch zwischen dem Recken in Längsrichtung und dem Recken in Querrichtung eine Wärmebehandlung durchgeführt werden.

Eine besonders geeignete Ausführungsform des erfindungsgemäßen Verfahrens Verfahren zur Herstellung einer erfindungsgemäßen Folie gemäß einem der Ansprüche 1 bis 11, umfasst die Schritte:
- Schmelzen des Materials für die Polyester-Schicht oder -Schichten (B) bei einer Temperatur von 250°C bis 300°C,
- Schmelzen des Materials für die Polypropylen-Schicht oder -Schichten (A) bei einer Temperatur von 200°C bis 260°C,
- Co-Extrudieren der Schmelzen unter Herstellung einer mehrschichtigen Schmelze,
- Kühlen der so entstandenen mehrschichtigen Schmelze auf einer Kühlwalze unter Herstellung eines Castfilms, wobei die Kühlwalze eine Temperatur von höchstens 40°C aufweist,
- Simultanes Recken des so entstandenen Films in Längsrichtung und in Querrichtung bei einer Temperatur im Bereich von 80°C bis 120°C oder sequentielles Recken des so entstandenen Films zunächst in Längsrichtung bei einer Temperatur im Bereich von 65°C bis 120°C und dann in Querrichtung bei einer Temperatur im Bereich von 80°C bis 120°C, wobei das Reckverhältnis in Längsrichtung und in Querrichtung 2,5 bis 7 beträgt,
- Durchführen einer Wärmebehandlung bei Temperaturen im Bereich von 160°C bis 230°C.

Es ist dabei besonders bevorzugt, wenn in dieser Ausführungsform des erfindungsgemäßen Verfahrens die Polypropylen-Schicht wenigstens 90 Gew.-% eines Polypropylen-Polymeren enthält, wobei es sich bei dem Polypropylen-Polymeren um ein Polypropylen-Ethylen-Copolymer handelt, das 85 bis 99 Gew.-% Polypropylen enthält und die Polyester-Schicht wenigstens 80 Gew.-% Polyethylenterephthalat enthält. Am meisten bevorzugt besteht die Polypropylen-Schicht in dieser Ausführungsform des erfindungsgemäßen Verfahrens aus Polypropylen-Ethylen-Copolymer, das 85 bis 99 Gew.-% Polypropylen enthält und die Polyester-Schicht besteht aus Polyethylenterephthalat.

Ein mögliches Anwendungsgebiet für die vorliegenden Folien kann die Herstellung von Hochbarrierefolien sein. Hierzu kann die von den Polypropylen-Schichten (A) befreite Polyesterschicht (B) mit Metallen oder anderen Barrierematerialien versehen werden. Durch die hohe Glätte, die hohe Staubfreiheit, die hohe Reinheit, die hohe Sauberkeit und die hohe Defektfreiheit der Oberfläche der von den Polypropylen-Schichten (A) befreite Polyesterschicht (B) weisen die Barriereschichten sehr wenig Fehlstellen und damit sehr gute Barriereeigenschaften auf. Die erfindungsgemäßen Folien können so Anwendung finden in der organischen Elektronik, für Quantum Dot Folien in LCD, für Vakuum-Isolationspaneele, für flexible anorganische Solarzellen wie z.B. CIGS und CdTe. Die erfindungsgemäßen Folien können auch für Leiterbahnen Verwendung finden.

Kurze Beschreibung der Figuren:
- Figur 1:: Figur 1 zeigt eine Folie bei der sich alle Schichten bis zum Rand der Folie erstrecken;
- Figur 2:: Figur 2 zeigt eine Folie, bei der sich nur die Polyesterschicht bis zum Rand der Folie erstreckt;
- Figur 3:: Figur 3 zeigt schematisch die Extrusion, Kühlung und Zugtrennung eines erfindungsgemäßen Verfahrens;
- Figur 4:: Figur 4 zeigt den Reckofen zum simultanen Recken eines Films.

### Beispiele:

### Messmethoden:

| | |
|---|---|
| Dicke: | DIN 53370 |
| Zugfestigkeit, Bruchdehnung, Elastizitätsmodul und F5-Wert: | ASTM D 882 |
| Schrumpf: | BMS TT 1.1 |
| Oberflächenrauheit: | optische Messung mittels Laser Scanning Mikroskopie |
| Transmissionswert und Trübung: | ASTM D 1003 |
| Schmelzflussindex: | ISO 1133 |
| Dichte: | ISO 1183 |

### Herstellen von erfindungsgemäßen biaxial verstreckten Folien mit A-B-A-Struktur

Die folgenden Angaben gelten für alle Beispiele. Die Folien bestehen aus zwei äußere Schichten bestehend aus Polypropylen-Ethylen-Copolymer (PP Copo) als Opferschichten (A) und eine innere Schicht bestehend aus Polyethylenterephthalat (PET) als Core-Schicht (B).

### Beispiel 1:

Die folgenden Angaben gelten für alle Versuche von Beispiel 1. Als PET wurde PET DAK 0,65 der Firma DAK verwendet. PET DAK 0,65 ist ein Polyethylenterephthalat-Homopolymer mit einer intrinsischen Viskosität (IV) von 0,65 dl/g. Als PP Copo wurde Lyondell Basell RP220 M verwendet. Lyondell Basell RP220 M ist ein Polypropylen-Ethylen-Copolymer mit einem Schmelzflussindex (MFR) von 8,5 g/10 min bei 230°C und einer Prüflast von 2,16 kg. Antiblockmittel wurden nicht verwendet. Als Hauptextruder für die PET-Schicht wurde ein Doppelvakuum-Extruder mit einem 200 µm Filter verwendet. Als Coextruder für die beiden PP Copo-Schichten wurde ebenfalls ein Zweischneckenextruder mit Vakuum-Entgasung und einem Filter von 400 µm verwendet. Als Breitschlitzdüse wurde eine 3-Lagendüse der Fa. EDI mit einem Lagenaufbau A-B-A verwendet. Ein Wasserbad wurde nicht verwendet. Für das Pinning wurde ein elektrostatisches Pinning-Gerät der Firma Kasuga Denki, Inc., Kawasaki, Japan verwendet.

Die Extrusionstemperatur des PP Copo beträgt 240 °C bei einer Austragsmenge von 17 kg/h, die auf beide Polypropylenschichten verteilt wird und die Extrusionstemperatur des PET beträgt 275 bis 280 °C bei einer Austragsmenge von 160 kg/h. Die Düsentemperatur betrug 270 bis 275 °C. Die Kühlwalze wies eine Temperatur von 20 °C und eine Oberflächengeschwindigkeit von 8 m/min auf.

Es wurden insgesamt 8 Versuche durchgeführt, die alle zufriedenstellende Castfilme erzeugten, die keine Ablösungserscheinungen der Folienschichten voneinander zeigten und gute optische Eigenschaften aufwiesen.

Die Folien wurden simultan-biaxial verstreckt. Der zur Verstreckung und Relaxierung verwendete Ofen war in insgesamt 9 Zonen (Z) eingeteilt, wobei in Zonen 1 bis 3 vorgewärmt wurde und in Zonen 4 und 5 linear verstreckt wurde. Die Wärmebehandlung erfolgte in Zonen 6 bis 9. Bei den Folien, bei denen in Längs- und/oder Querrichtung relaxiert wurde, erfolgte die Relaxierung in den Zonen 8 und 9 zu je gleichen Teilen. Die Zonen 3 bis 7 und 9 sind weiter unterteilt in einen vorderen Bereich (Teilzonen 1 und 2) und in einen hinteren Bereich (Teilzonen 3 und 4), wobei die Teilzonen 1 und 3 oben liegen und Teilzonen 2 und 4 unten.

Bei den 8 Versuchen wurden verschiedene Variationen der Temperaturen in den Zonen des Reckofens, der Reckverhältnisse und der Relaxierung verwendet. Die folgende Tabelle 1 zeigt die bei dem Verstrecken verwendeten Temperaturen. Die folgende Tabelle 2 zeigt die dabei verwendeten Parameter. Die ersten vier Versuche unterscheiden sich nur im Reckverhältnis und/oder in der Relaxierung voneinander.

**Tabelle 1:**

| Ofentemperatur (alle Angaben in °C) | | | | | | | | |
|---|---|---|---|---|---|---|---|---|
| Lfd.-Nr. | 1 | 2 | 3 | 4 | 5 | 6 | 7 | 8 |
| Vorheizen | | | | | | | | |
| Z1 | 98 | 98 | 98 | 98 | 93 | 93 | 93 | 93 |
| Z2 | 99 | 99 | 99 | 99 | 94 | 94 | 94 | 94 |
| Z3.1 Z3.2 | 100 | 100 | 100 | 100 | 95 | 95 | 95 | 95 |
| Z3.3 Z3.4 | 101 | 101 | 101 | 101 | 96 | 96 | 96 | 96 |

| Strecken | | | | | | | | |
|---|---|---|---|---|---|---|---|---|
| Z4.1 Z4.2 | 102 | 102 | 102 | 101 | 97 | 97 | 97 | 97 |
| Z4.3 Z4.4 | 104 | 104 | 104 | 102 | 98 | 98 | 98 | 98 |
| Z5.1 Z5.2 | 106 | 106 | 106 | 103 | 98 | 98 | 98 | 98 |
| Z5.3 Z5.4 | 108 | 108 | 108 | 104 | 98 | 98 | 98 | 98 |

| Wärmebehandlung (Annealing) | | | | | | | | |
|---|---|---|---|---|---|---|---|---|
| Z6.1 Z6.2 | 140 | 140 | 140 | 140 | 130 | 130 | 130 | 150 |
| Z6.3 Z6.4 | 160 | 160 | 160 | 160 | 140 | 160 | 160 | 160 |
| Z7.1 Z7.2 | 180 | 180 | 180 | 180 | 180 | 185 | 185 | 180 |
| Z7.3 Z7.4 | 180 | 180 | 180 | 180 | 180 | 185 | 185 | 180 |
| Z8 | 180 | 180 | 180 | 180 | 180 | 185 | 185 | 180 |
| Z9.1 Z9.2 | 180 | 180 | 180 | 180 | 175 | 185 | 185 | 175 |
| Z9.3 Z9.4 | 170 | 170 | 170 | 170 | 170 | 170 | 170 | 160 |

**Tabelle 2:**

| Parameter beim Verstrecken | | | | | | | | |
|---|---|---|---|---|---|---|---|---|
| Versuch Nummer | 1 | 2 | 3 | 4 | 5 | 6 | 7 | 8 |

| Recken und Relaxierung in Längsrichtung (MDx) | | | | | | | | |
|---|---|---|---|---|---|---|---|---|
| Ausgang | 3,30 | 4,00 | 3,64 | 3,64 | 3,64 | 3,71 | 3,69 | 3,76 |
| Maximal | 3,30 | 4,00 | 3,71 | 3,71 | 3,71 | 3,80 | 3,83 | 3,84 |
| Relaxieren (%) | 0 | 0 | 1,9 | 1,9 | 1,9 | 2,4 | 3,7 | 2,1 |

| Recken und Relaxierung in Querrichtung (TDx) | | | | | | | | |
|---|---|---|---|---|---|---|---|---|
| Ausgang | 3,60 | 4,00 | 3,80 | 3,80 | 3,80 | 3,80 | 3,65 | 3,85 |
| Maximal | 3,60 | 4,00 | 4,00 | 4,00 | 4,00 | 4,00 | 4,00 | 4,20 |
| Relaxieren (%) | 0 | 0 | 5,0 | 5,0 | 5,0 | 5,0 | 8, 8 | 8,3 |

Die folgende Tabelle 3 zeigt die Dicke und einige mechanischen Eigenschaften der nach Abziehen der Polypropylen-Schichten erhaltenen PET-Folie für 6 der 8 Versuche:

**Tabelle 3:**

| Dicke und einige mechanische Eigenschaften der PET-Schicht nach Abzug der Polypropylen-Schichten | | | | | | | |
|---|---|---|---|---|---|---|---|
| Versuch Nummer | | 1 | 2 | 3 | 4 | 5 | 8 |
| Längsrichtung (MD) | | | | | | | |
| Dicke | µm | 32 | 30 | 32 | 32 | 33 | 32 |
| Zugfestigkeit | MPa | 187 | 249 | 219 | 245 | 247 | 266 |
| Bruchdehnung | % | 186 | 108 | 143 | 136 | 113 | 105 |
| E-Modul | MPa | 3637 | 4193 | 3807 | 3861 | 4012 | 4060 |
| F-5 Wert | MPa | 98 | 120 | 109 | 111 | 115 | 120 |
| F max | N | 91 | 110 | 103 | 117 | 124 | 127 |

| Querrichtung (TD) | | | | | | | |
|---|---|---|---|---|---|---|---|
| Dicke | µm | 31 | 30 | 32 | 33 | 33 | 32 |
| Zugfestigkeit | MPa | 269 | 277 | 264 | 276 | 289 | 299 |
| Bruchdehnung | % | 107 | 83 | 81 | 86 | 85 | 81 |
| E-Modul | MPa | 5196 | 5052 | 4918 | 4971 | 4657 | 4748 |
| F-5 Wert | MPa | 134 | 148 | 129 | 129 | 127 | 118 |
| F max | N | 126 | 126 | 127 | 137 | 142 | 142 |

Tabelle 4 zeigt die Ergebnisse der Messung des Schrumpfs der nach Abziehen der Polypropylen-Schichten (A) erhaltenen PET-Folie für die 8 Versuche.

**Tabelle 4:**

| Schrumpf 150/5°C der PET-Schicht nach Abzug der Polypropylen-Schichten (Alle Angaben in Prozent) | | | | | | | | |
|---|---|---|---|---|---|---|---|---|
| Versuch Nummer | 1 | 2 | 3 | 4 | 5 | 6 | 7 | 8 |

| Längsrichtung (MD) | | | | | | | | |
|---|---|---|---|---|---|---|---|---|
| Linke Seite* | 3,2 | 6,5 | 6 | 6,2 | 7 | 6 | 4,5 | 6,5 |
| Mitte* | 2 | 4 | 3 | 4 | 5,2 | 4 | 3,2 | 5,2 |
| Rechte Seite* | 3 | 5 | 3,2 | 3,2 | 5 | 4,2 | 3 | 6 |
| Durchschnitt | 2,7 | 5,2 | 4,1 | 4,5 | 5,7 | 4,7 | 3,6 | 5,9 |

| Querrichtung (TD) | | | | | | | | |
|---|---|---|---|---|---|---|---|---|
| Linke Seite* | 3,2 | 7 | 3,2 | 2,2 | 4,8 | 4,2 | 1,8 | 2,8 |
| Mitte* | 2 | 7 | 2,2 | 1,2 | 4,2 | 3,2 | 0,5 | 2,2 |
| Rechte Seite* | 2 | 7 | 2 | 0,5 | 3 | 2,2 | 0 | 2 |
| Durchschnitt | 2,4 | 7,0 | 2,5 | 1,3 | 4,0 | 3,2 | 0, 8 | 2,3 |

| | | | | | | | | |
|---|---|---|---|---|---|---|---|---|
| *Bei Aufsicht von oben auf die Folie, Ortsangabe in Laufrichtung. Unterschiedliche Schrumpfwerte an verschiedenen Stellen des Querschnitts der Folie entstehen durch Variationen der Temperaturen an verschiedenen Stellen des Ofens. | | | | | | | | |

Tabelle 5 zeigt die optischen Eigenschaften der hergestellten Folien.

**Tabelle 5 (Angaben in Prozent soweit nicht anders angegeben) :**

| Versuch Nr. | | 1 | 2 | 3 | 4 | 5 | 6 | 7 | 8 |
|---|---|---|---|---|---|---|---|---|---|
| Dreilagenfolie | | | | | | | | | |
| Trübung | | 7,8 | 5,1 | 12,5 | 5,3 | 6,9 | 5,5 | 3,4 | 6,2 |
| TransmissionsWert | | 94,1 | 94,2 | 94,2 | 94,3 | 94,2 | 94,2 | 94,2 | 93,9 |

| Biaxial orientierte PET-Folie nach Abziehen der Polypropylenschichten | | | | | | | | | |
|---|---|---|---|---|---|---|---|---|---|
| Trübung | | 0,3 | 0,2 | 0,2 | 0,3 | 0,2 | 0,2 | 0,2 | 0,2 |
| TransmissionsWert | | 91,4 | 91,2 | 91,2 | 91,2 | 91,1 | 91,1 | 91,1 | 91,0 |
| Oberflächenrauheit [nm] | Rz (AK*) | 55,5 | 17,3 | 26,1 | 24,7 | 19,1 | 21,4 | 22,7 | 32,7 |
| | Ra (AK*) | 4,8 | 2,9 | 4,0 | 4,0 | 3,7 | 3,2 | 4,0 | 3,0 |
| | Rz (CR*) | 25,7 | 19,1 | 22,3 | 27,0 | 18,2 | 20,1 | 35,1 | 20,5 |
| | Rz (CR*) | 4,0 | 3,4 | 3,5 | 4,7 | 3,5 | 3,5 | 3,5 | 2,8 |

| | | | | | | | | | |
|---|---|---|---|---|---|---|---|---|---|
| *CR: Seite der Folie, die Kontakt mit der Kühlwalze hatte. AK: Seite der Folie, die keinen Kontakt mit der Kühlwalze hatte. | | | | | | | | | |

### Beispiel 2:

Die folgenden Angaben gelten für alle Versuche von Beispiel 2. Als PET wurde PET Xpure 4004 der Firma Invista (Wichita, USA) verwendet. PET Xpure 4004 ist ein Polyethylenterephthalat-Homopolymer mit einer intrinsischen Viskosität (IV) von 0,636 dl/g. Als PP Copo wurde wie in Beispiel 1 RP220 M der Firma Lyondellbasell verwendet. In Versuchen 9 und 12 wurde kein Antiblockmittel verwendet.

In Versuchen 10 und 11 wurde Polybatch® AB PP 05SC als Antiblockmittel verwendet. Es handelt sich dabei um ein Masterbatch aus Polypropylen-Homopolymer, welches 5 Gew.-% synthetisches Siliziumdioxid enthält.

Als Hauptextruder für die PET-Schicht wurde ein Doppelvakuum-Extruder mit einem 200 µm Filter verwendet. Als Coextruder für die beiden PP Copo-Schichten wurde ebenfalls ein Zweischneckenextruder mit Vakuum-Entgasung und einem Filter von 200 µm verwendet. Als Breitschlitzdüse wurde eine 3-Lagendüse der Fa. EDI mit einem Lagenaufbau A-B-A verwendet. Die äußeren Schichten A erstrecken sich nicht ganz bis zum Rand der Folie, wie in Figur 2 gezeigt. Sie bedecken nur etwa 90 % der Folienbreite. Ein Wasserbad wurde nicht verwendet. Für das Pinning wurde dasselbe Gerät wie in Beispiel 1 verwendet.

Die Extrusionstemperatur des PP Copo betrug 255 °C bei einer Austragsmenge von 17 kg/h, die auf beide Polypropylenschichten verteilt wird und die Extrusionstemperatur des PET betrug 270 °C bei einer Austragsmenge von 160 kg/h. Die Düsentemperatur betrug 270 bis 275 °C. Die Kühlwalze wies eine Temperatur von 20 °C und eine Oberflächengeschwindigkeit von 24 m/min auf. Die Folien wurden simultan-biaxial verstreckt.

Es wurden insgesamt 4 Versuche durchgeführt, die alle zufriedenstellende Castfilme und Folien erzeugten, die keine Ablösungserscheinungen der Folienschichten voneinander zeigten und gute optische Eigenschaften und einen sehr geringen Schrumpf aufwiesen. Die Dicke der Schichten, die Menge des verwendeten Antiblockmittels und der Schrumpf der so entstandenen Folien sind in Tabelle 6 wiedergegeben. Wobei der Schrumpf der Schrumpf der Schicht (B) ist, nachdem beide Schichten (A) von der Schicht (B) entfernt (abgezogen) wurden.

**Tabelle 6:**

| Versuch Nummer | Dicke (µm) | | | Antiblock | Schrumpf 150/30 (%) Schicht B | |
|---|---|---|---|---|---|---|
| | A | B | A-B-A | Schicht A | MD | TD |
| 9 | 10 | 50 | 70 | ohne | 0.13 | 0.77 |
| 10 | 10 | 50 | 70 | 2% | 0.13 | 0.77 |
| 11 | 5 | 50 | 60 | 2% | 0.0 | 0.40 |
| 12 | 5 | 50 | 60 | ohne | 0.07 | 0.20 |

| | | | | | | |
|---|---|---|---|---|---|---|
| MD: Längsrichtung; TD: Querrichtung | | | | | | |

Der zur Verstreckung und Relaxierung verwendete Ofen war derselbe wie in Beispiel 1 und die Aufteilung des Vorheizens, des Streckens, der Wärmebehandlung und der Relaxierung auf die Zonen war ebenfalls wie in Beispiel 1.

In allen 4 Versuchen wurden in den Zonen des Reckofens dieselben Temperaturen und Reckverhältnisse verwendet. Die folgende Tabelle 7 zeigt die bei dem Verstrecken verwendeten Ofentemperaturen. Die folgenden Tabelle 8 zeigt die dabei verwendeten Reckverhältnisse.

**Tabelle 7:**

| Zone | Temperatur | Reckverhältnisse | |
|---|---|---|---|
| | | Längsrichtung (MD) | Querrichtung (TD) |
| Zone 1 | 100 | 1.0 | 1.0 |
| Zone 2 | 101 | 1.0 | 1.0 |
| Zone 3 (1+2) | 102 | 3.33 | 2.3 |
| Zone 3 (3+4) | 103 | | |
| Zone 4 (1+2) | 104 | 3.33 | 3.6 |
| Zone 4 (3+4) | 106 | | |
| Zone 5 (1+2) | 130 | 3.33 | 3.6 |
| Zone 5 (3+4) | 160 | | |
| Zone 6 (1+2) | 170 | 3.33 | 3.6 |
| Zone 6 (3+4) | 180 | | |
| Zone 7 (1+2) | 185 | 3.16 | 3.4 |
| Zone 7 (3+4) | 185 | | |
| Zone 8 | 185 | 3.0 | 3.2 |
| Zone 9 (1+2) | 180 | 3.0 | 3.2 |
| Zone 9 (3+4) | 170 | | |

Bei allen Versuchen wurde nach dem Verstrecken in beiden Richtungen um 10 % relaxiert. Wie man der Tabelle 6 entnehmen kann, erhält man unter diesen Bedingungen Folien mit extrem geringem Schrumpf, was die Verarbeitung sehr erleichtert und die Verwendung der Folien auf Anwendungen mit hohen Temperaturen erweitert.

Die folgende Tabelle 8 zeigt einige mechanische Eigenschaften der nach Abziehen der Polypropylen-Schichten (A) erhaltenen PET-Folie (B):

**Tabelle 8:**

| Mechanische Eigenschaften der PET-Schicht (B) nach dem Abziehen der Polypropylen-Schichten (A) | | | | | | |
|---|---|---|---|---|---|---|
| Versuch Nummer | | | 9 | 10 | 11 | 12 |
| Längsrichtung (MD) | | | | | | |
| Zugfestigkeit | | MPa | 235 | 235 | 231 | 231 |
| Bruchdehnung | | % | 187 | 187 | 197 | 197 |
| Elastizitätsmodul | | MPa | 4143 | 4143 | 4068 | 4068 |
| F-5 Wert | | MPa | 100 | 100 | 98 | 98 |

| Querrichtung (TD) | | | | | | |
|---|---|---|---|---|---|---|
| Zugfestigkeit | | MPa | 264 | 264 | 271 | 271 |
| Bruchdehnung | | % | 129 | 129 | 140 | 140 |
| Elastizitätsmodul | | MPa | 5003 | 5003 | 5006 | 5006 |
| F-5 Wert | | MPa | 112 | 112 | 110 | 110 |

| Rauheit, Trübung, Transmissionswert | | | | | | |
|---|---|---|---|---|---|---|
| Oberflächenrauheit | Rz (AK*) | nm | 17 | 38 | 40 | 15 |
| | Ra (AK*) | nm | 3 | 6 | 7 | 3 |
| | Rz(CR*) | nm | 16 | 37 | 58 | 16 |
| | Ra(CR*) | nm | 3 | 5 | 8 | 3 |
| Trübung | | % | 0,17 | 0,4 | 0,77 | 0,2 |
| Transmissionswert | | % | 90,7 | 90,7 | 90,6 | 90,6 |

| | | | | | | |
|---|---|---|---|---|---|---|
| *CR: Seite der Folie, die Kontakt mit der Kühlwalze hatte. AK: Seite der Folie, die keinen Kontakt mit der Kühlwalze hatte. | | | | | | |

### Beispiel 3:

Entsprechend den Angaben in Beispiel 2 wurde der gleiche Castfilm hergestellt. In Versuch 13 betrug die Austragsmenge des Polypropylen-Copolymer jedoch 32 kg/h, die auf beide Polypropylenschichten verteilt wird und die Austragsmenge des PET betrug 162 kg/h. In Versuch 14 betrug die Austragsmenge des Polypropylen-Copolymer ebenfalls 32 kg/h, die auf beide Polypropylenschichten verteilt wird und die Austragsmenge des PET betrug 163 kg/h. Die Folien wurden jedoch sequenziell anstatt simultan gereckt. Es wurden zwei Versuche (Nummern 13 und 14) durchgeführt. In Versuch 13 betrug die Foliendicke 68 µm und in Versuch 14 64 µm.

Aufteilung der Schichtdicken auf A-B-A:
Versuch 13: 10 µm - 48 µm - 10 µm
Versuch 14: 9,5 µm - 45 µm - 9,5 µm

Das Reckverhältnis in Längsrichtung betrug in Versuch 1 3,1 und in Versuch 2 3,3.

Zunächst wurde der erzeugte Film in einer Reckanlage mit einem Walzensystem in Längsrichtung (MD) gestreckt, wobei die Temperatur des Films jeweils wie in Tabelle 9 gezeigt eingestellt wurde. Die Walzentemperaturen des Längsreckwerks waren für beide Versuche identisch.

**Tabelle 9:**

| Phase | Temperatur (Setpoint) [°C] |
|---|---|
| Vorwärmen 1 | 68 |
| Vorwärmen 2 | 72 |
| Vorwärmen 3 | 74 |
| Vorwärmen 4 | 74 |
| Vorwärmen 5 | 78 |
| Vorwärmen 6 | 80 |
| Recken 1 | 82 |
| Recken 2 | 84 |
| Recken 3 | 30 |
| Recken 4 | 30 |
| Wärmebehandlung 1 | 35 |
| Wärmebehandlung 2 | 35 |

Anschließend wurden beide Folien in demselben Reckofen wie er in Beispielen 1 und 2 beschrieben ist in Querrichtung (TD) um das Reckverhältnis 3,8 gereckt. In den Zonen 7 und 8 erfolgte eine Relaxierung in Querrichtung um 5,3 %. Das Wärmeprofil des Reckofens während des Querverreckens kann Tabelle 10 entnommen werden:

**Tabelle 10:**

| Zone | Temperatur (Setpoint) [°C] | |
|---|---|---|
| | Versuch Nummer 13 | Versuch Nummer 14 |
| 1 | 88,0 | 90,0 |
| 2 | 90,0 | 92,0 |
| 3 | 102,0 | 102,0 |
| 4 | 104,0 | 104,0 |
| 5 | 120,0 | 120,0 |
| 6 | 210,0 | 210,0 |
| 7 | 210,0 | 210,0 |
| 8 | 220,0 | 220,0 |
| 9 | 190,0 | 190,0 |

Vorwärmen wird in den Zonen 1 und 2, Recken in den Zonen 3 und 4 und Wärmebehandlung wird in den Zonen 5 bis 9 vorgenommen.

Tabelle 11 gibt die Daten der so hergestellten Folien wieder.

**Tabelle 11:**

| Eigenschaften der PET-Schicht (B) nach dem Abziehen der Polypropylen-Schichten (A) | | | |
|---|---|---|---|
| Versuch Nummer | | 13 | 14 |
| Längsrichtung (MD) | | | |
| Zugfestigkeit | MPa | 248 | 278 |
| Bruchdehnung | % | 174 | 144 |
| Elastizitätsmodul | MPa | 3963 | 4235 |
| F-5 Wert | MPa | 114 | 117 |
| F max | N | 178 | 179 |
| Schrumpf 150/30 | % | 1,07 | 1,5 |

| Querrichtung (TD) | | | |
|---|---|---|---|
| Zugfestigkeit | MPa | 308 | 300 |
| Bruchdehnung | % | 115 | 116 |
| Elastizitätsmodul | MPa | 4994 | 4909 |
| F-5 Wert | MPa | 124 | 122 |
| F max | N | 227 | 197 |
| Schrumpf 150/30 | % | 0,93 | 1,5 |

| optische Eigenschaften | | | |
|---|---|---|---|
| Trübung | % | 0,2 | 0,2 |
| Transmissionswert | % | 90,5 | 90,6 |
| Clarity | % | 99,6 | 99,7 |

## Patentansprüche

1. Co-extrudierte biaxial orientierte Folie mit A-B-A-Struktur umfassend eine Polyester-Schicht (B), wobei auf beiden Oberflächen der Polyester-Schicht (B) je eine abziehbare Polypropylen-Schicht (A) aufgebracht ist, die rückstandsfrei von der Polyester-Schicht (B) abziehbar sind, wobei die Polypropylen-Schichten wenigstens 80 Gew.-% Polypropylen enthalten und die Polyester-Schicht (B) wenigstens 50 Gew.-% eines Polyesters enthält, der als Monomere aliphatische Diole und aromatische Dicarbonsäuren umfasst.

2. Folie nach Anspruch 1, **dadurch gekennzeichnet, dass** nur eine der beiden Polypropylen-Schichten (A) Antiblockmittel enthält.

3. Folie nach einem der Ansprüche 1 oder 2, **dadurch gekennzeichnet, dass** die Polyester-Schicht (B) eine Dicke im Bereich von 30 µm bis 200 µm aufweist.

4. Folie nach einem der Ansprüche 1 bis 3, **dadurch gekennzeichnet, dass** nur eine der beiden Polypropylen-Schichten (A) Antiblockmittel enthält und dass die Polyester-Schicht (B) eine Dicke im Bereich von 30 µm bis 200 µm aufweist.

5. Folie nach einem der Ansprüche 1 bis 4, **dadurch gekennzeichnet, dass** es sich bei dem Polypropylen um ein Polypropylen-Ethylen-Copolymer handelt.

6. Folie nach einem der Ansprüche 1 bis 5, **dadurch gekennzeichnet, dass** es sich bei dem Polyester um Polyethylenterephthalat handelt.

7. Folie nach einem der Ansprüche 1 bis 6, **dadurch gekennzeichnet, dass** die Polypropylen-Schichten (A) eine Dicke von wenigstens 5 µm aufweisen.

8. Folie nach einem der Ansprüche 1 bis 7, **dadurch gekennzeichnet, dass** die der Polypropylen-Schicht zugewandte Seite der Polyester-Schicht nach dem Abziehen der Polypropylen-Schicht eine Oberflächenrauheit Ra von höchstens 10 nm aufweist.

9. Folie nach einem der Ansprüche 1 bis 8, **dadurch gekennzeichnet, dass** die der Polypropylen-Schicht zugewandte Seite der Polyester-Schicht nach dem Abziehen der Polypropylen-Schicht eine Oberflächenrauheit Rz von höchstens 100 nm aufweist.

10. Folie nach einem der Ansprüche 1 bis 7, **dadurch gekennzeichnet, dass** die Polyester-Schicht nach dem Abziehen der Polypropylen-Schicht einen Schrumpf in Querrichtung von höchstens 0,5 % aufweist.

11. Folie nach einem der Ansprüche 1 bis10, **dadurch gekennzeichnet, dass** die Polyester-Schicht nach dem Abziehen der Polypropylen-Schicht eine Trübung von höchstens 1 % aufweist.

12. Folie nach einem der Ansprüche 1 bis 11, **dadurch gekennzeichnet, dass** die Polyester-Schicht nach dem Abziehen der Polypropylen-Schicht einen Transmissionswert von wenigstens 80 % aufweist.

13. Verfahren zur Herstellung einer Folie gemäß einem der Ansprüche 1 bis 12, umfassend die Schritte:
- Schmelzen des Materials für die Polyester-Schicht (B),
- Schmelzen des Materials für die Polypropylen-Schichten (A),
- Co-Extrudieren der Schmelzen unter Herstellung einer mehrschichtigen Schmelze,
- Kühlen der so entstandenen mehrschichtigen Schmelze auf einer Kühlwalze unter Herstellung eines Castfilms, wobei die Kühlwalze eine Temperatur von höchstens 40°C aufweist,
- biaxiales Recken des so entstandenen Films in Längsrichtung und in Querrichtung, wobei das Reckverhältnis in Längsrichtung und in Querrichtung 2,5 bis 7 beträgt,
- Durchführen einer Wärmebehandlung bei Temperaturen im Bereich von 160°C bis 230°C.

14. Verfahren nach Anspruch 13, **dadurch gekennzeichnet, dass** während der Wärmebehandlung eine Relaxierung in Längsrichtung oder in Querrichtung oder in beiden Richtungen vorgenommen wird.

15. Verfahren nach einem der Ansprüche 13 oder 14, **dadurch gekennzeichnet, dass** der Umfang der Relaxierung 2 % und 12 %, bevorzugt zwischen 4 % und 12 % und ganz besonders bevorzugt 5 % bis 12 % beträgt, bezogen auf das jeweilige Reckverhältnis.
